# FASCICULE DE BREVET EUROPEEN

(11) **EP 1 848 976 B1**
(45) Date de publication et mention de la délivrance du brevet: **02.05.2012**
(21) Numéro de dépôt: 06709220.5
(22) Date de dépôt: 02.02.2006
(51) Int. Cl.: G01L 27/00, G01D 3/08, G05B 9/03, G05D 1/00

(54) **PROCEDE ET DISPOSITIF POUR DETECTER AU SOL L'OBSTRUCTION D'UNE PRISE DE PRESSION D'UN CAPTEUR DE PRESSION STATIQUE D'UN AERONEF**
VERFAHREN UND VORRICHTUNG ZUR ERFASSUNG DER BLOCKIERUNG EINES DRUCKABGRIFFS EINES STATISCHEN DRUCKSENSORS EINES FLUGZEUGS AM BODEN
METHOD AND DEVICE FOR DETECTING, ON THE GROUND, THE OBSTRUCTION OF A PRESSURE TAP OF A STATIC PRESSURE SENSOR OF AN AIRCRAFT

(30) Priorité: 14.02.2005 FR 0501453
(43) Date de publication de la demande: 31.10.2007
(73) Titulaire: AIRBUS OPERATIONS (SAS), 31060 Toulouse (FR)
(72) Inventeur: FONTOVA, Laurent, F-31000 Toulouse (FR); FREISSINET, Sébastien, 31300 Toulouse (FR)
(74) Mandataire: Hauer, Bernard
(86) Numéro de dépôt international: PCT/FR2006/000228
(87) Numéro de publication internationale: WO 2006/087440

(56) Documents cités:
- WO-A-98/41911
- DE-A1- 3 618 798
- GB-A- 2 049 954
- US-A- 4 598 381
- US-A- 5 374 014
- US-A- 5 537 869
- US-A- 5 946 642
- US-A1- 2004 111 193
- US-A1- 2005 010 389
- US-B1- 6 668 640
- US-B1- 6 804 600

## Description

La présente invention concerne un procédé pour détecter l'obstruction d'une prise de pression d'au moins un capteur de pression statique d'un aéronef, au sol.

De façon usuelle, un tel capteur de pression statique fait partie d'une centrale anémométrique qui est destinée à mesurer des "données air" ("air data" en anglais) permettant de déterminer des valeurs de paramètres tels que l'altitude de l'aéronef, sa vitesse ..., qui sont notamment utilisés pour le pilotage de l'aéronef.

On sait qu'un tel capteur de pression statique comporte généralement au moins :
- une sonde qui est munie d'une prise de pression traversant le fuselage de l'aéronef ;
- un module qui est relié par une tuyauterie à ladite sonde ; et
- un système de chauffage activable qui est susceptible de chauffer ladite sonde.

Toute défaillance d'un tel capteur de pression statique doit bien entendu pouvoir être détectée de façon rapide et fiable, puisque sinon les mesures réalisées fournissent des valeurs erronées pour les paramètres précités (utilisés pour le pilotage), ce qui peut avoir des conséquences très dommageables pour la sécurité de l'aéronef lors du vol.

On sait que des erreurs humaines, notamment lors d'opérations de maintenance de l'avion, peuvent entraîner la défaillance d'un tel capteur de pression statique.

Par exemple, le personnel chargé d'effectuer une opération de lavage de l'avion colle fréquemment un morceau de ruban adhésif sur la prise de pression de la sonde, afin d'éviter que de l'eau pénètre dans la tuyauterie liée à ladite sonde lors dudit lavage. S'il oublie d'enlever le morceau de ruban adhésif après le lavage, le capteur de pression sera défaillant lors du vol suivant de l'aéronef, puisqu'il ne pourra pas mesurer la pression de l'air extérieure au fuselage. Il mesurera en fait la pression de l'air emprisonné dans la tuyauterie qui est fermée (à son extrémité du côté de la sonde) par le morceau de ruban adhésif, cette pression mesurée étant bien entendu différente en vol de la pression extérieure.

On connaît différentes solutions (demandes de brevet FR-2 847 669 et FR-2 857 447 par exemple) permettant de détecter la défaillance d'un capteur de pression qui fait partie d'une centrale anémométrique d'un aéronef. Toutefois, les solutions connues permettent uniquement de détecter une défaillance lors d'un vol de l'aéronef. Dans le cas d'une telle détection en vol, il est simplement possible de ne plus tenir compte dans la suite du vol des mesures réalisées par le capteur de pression défaillant, afin de ne pas prendre en compte des mesures fausses (ce qui est bien entendu important pour la sécurité), mais on n'est pas en mesure de réparer le capteur de pression défaillant. Bien qu'une centrale anémométrique d'un aéronef comporte généralement plusieurs capteurs de pression de sorte que la défaillance d'un desdits capteurs de pression n'empêche pas la poursuite du vol, la non-prise en compte des données d'un capteur de pression peut néanmoins avoir une influence négative sur la précision des valeurs des paramètres utilisés pour le pilotage de l'aéronef, qui sont issues des mesures réalisées par cette centrale anémométrique.

Par ailleurs, on connaît :
- par le document US-2004/0111193, un dispositif pour détecter la défaillance d'un capteur de pression d'une centrale anémométrique d'un aéronef, qui comporte au moins deux capteurs de pression. Ce dispositif comprend :
   ■ des moyens pour acquérir les valeurs de mesures réalisées par les capteurs de pression ;
   ■ des moyens de calcul ;
   ■ des moyens de comparaison ;
   ■ des moyens de sélection ; et
   ■ des moyens d'affichage susceptibles d'afficher, sur au moins un dispositif de visualisation qui est monté sur l'aéronef, une information de défaillance de la centrale anémométrique ; et
- par le document US-5 537 869, un système de mesure de pression intégré à canaux multiples et un procédé de mesure correspondant.

La présente invention a pour objet de remédier aux inconvénients précités. Elle concerne un procédé pour détecter, au sol, de façon rapide et fiable, et à coût réduit, toute obstruction d'une prise de pression d'une sonde d'au moins un capteur de pression statique d'un aéronef, en particulier d'un avion de transport, ledit capteur de pression statique étant susceptible de mesurer la pression à l'intérieur de la sonde et comportant, en plus de ladite sonde, au moins un système de chauffage activable susceptible de chauffer cette dernière.

A cet effet, selon l'invention, ledit procédé est remarquable en ce que :
a) lors de l'activation du système de chauffage d'au moins un capteur de pression statique, on réalise à l'aide dudit capteur de pression statique une première mesure d'au moins un paramètre dépendant de la pression à l'intérieur de ladite sonde ;
b) une première durée prédéterminée après ladite activation du système de chauffage, on réalise à l'aide dudit capteur de pression statique une seconde mesure dudit paramètre ;
c) on calcule la différence entre lesdites première et seconde mesures ;
d) on compare la différence ainsi calculée à une valeur prédéterminée ; et
e) si cette différence est supérieure à ladite valeur prédéterminée, on émet un signal d'alerte signalant la détection d'une obstruction.

La présente invention prend donc en compte le fait que si la prise de pression de la sonde est bouchée ou obstruée, par exemple par un morceau de ruban adhésif, l'air qui est emprisonné à l'intérieur de cette sonde va s'échauffer dès que le système de chauffage de la sonde est activé de sorte que la pression statique à l'intérieur de la sonde qui est mesurée par le capteur de pression statique va alors très vite augmenter. Cette augmentation peut être détectée en surveillant directement la pression statique ou en surveillant un autre paramètre, notamment l'altitude barométrique ou le taux de variation de l'altitude barométrique ("altitude rate" en anglais), qui dépend de cette pression statique.

Comme de façon usuelle le système de chauffage de la sonde est activé au sol, généralement dès la mise en marche d'au moins un moteur de l'aéronef ou lorsque l'aéronef commence à rouler ou lors de l'activation d'un système de chauffage général, on est en mesure, grâce à l'invention, de surveiller l'obstruction d'une prise de pression d'un capteur de pression statique, lorsque l'aéronef se trouve encore au sol. Aussi, en cas de détection d'une telle obstruction, le personnel de maintenance peut rapidement déboucher la sonde obstruée avant même le décollage de l'aéronef. Le capteur de pression statique défaillant est donc rapidement remis en fonctionnement et il peut être utilisé dès le vol qui est prévu, à la différence de ce qui se passe pour les solutions usuelles précitées.

De façon avantageuse, on met en oeuvre, de plus, une surveillance de l'état d'activation dudit système de chauffage du capteur de pression statique et, à l'étape a), on réalise ladite première mesure dès que l'on détecte l'activation dudit système de chauffage grâce à ladite surveillance.

Dans un mode de réalisation particulier, à l'étape e), on émet un signal d'alerte uniquement si ladite différence est supérieure à ladite valeur prédéterminée pendant au moins une seconde durée prédéterminée.

Comme indiqué précédemment, ledit paramètre mesuré peut représenter l'altitude barométrique. Dans ce cas, de préférence, on utilise deux capteurs de pression statique et chacune desdites première et seconde mesures de l'altitude barométrique est réalisée à l'aide de données air fournies par ces deux capteurs de pression statique.

Ledit paramètre mesuré peut également représenter le taux de variation de l'altitude barométrique.

Bien entendu, dans une variante simplifiée, ledit paramètre représente simplement la pression statique qui est présente à l'intérieur de la sonde et qui est mesurée par le capteur de pression statique.

Les figures du dessin annexé feront bien comprendre comment l'invention peut être réalisée. Sur ces figures, des références identiques désignent des éléments semblables.
La figure 1 est le schéma synoptique d'un dispositif .
La figure 2 montre des détails d'un capteur de pression qui est susceptible d'être surveillé par un dispositif .

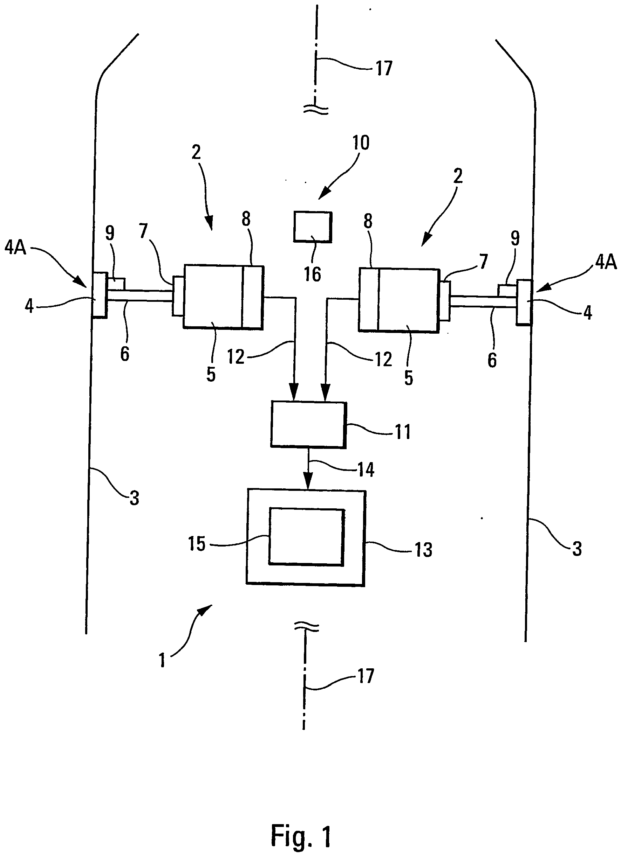

Le dispositif 1 et représenté schématiquement sur la figure 1 est destiné à la surveillance d'au moins un capteur de pression statique 2 d'un aéronef, en particulier d'un avion de transport, dont on a uniquement représenté une partie du fuselage 3 sur cette figure 1 pour des raisons de simplification du dessin.

Plus précisément, ledit dispositif 1 est destiné à détecter toute obstruction d'une prise de pression 4A d'une sonde 4 d'au moins un capteur de pression statique 2 de l'aéronef.

On sait qu'un tel capteur de pression statique 2 fait généralement partie d'une centrale anémométrique 10 qui est destinée à mesurer des "données air" ("air data" en anglais) permettant de déterminer des valeurs de paramètres tels que l'altitude, la vitesse, ... de l'aéronef. Ces paramètres sont notamment utilisés pour le pilotage de l'aéronef. De façon usuelle, un capteur de pression statique 2 comporte :
- une sonde 4 qui est monté, de façon traversante, sur le fuselage 3 de l'aéronef et accède à l'extérieur par l'intermédiaire d'une prise de pression 4A ;
- un module 5 qui est relié par une tuyauterie 6 à la sonde 4. Généralement, la tuyauterie 6 qui réalise une liaison pneumatique est connectée au module 5 au moyen d'un connecteur pneumatique 7 qui permet de le déconnecter et le reconnecter facilement et rapidement. De plus, un convertisseur analogique/numérique 8 peut être associé audit module 5 ; et
- un système de chauffage 9 usuel, qui est susceptible de chauffer ladite sonde 4 et qui est actionnable manuellement et/ou automatiquement.

Pour détecter une défaillance du capteur de pression statique 2 due au fait que la prise de pression 4A est obstruée (ou bouchée), ledit dispositif 1 comporte :
- au moins ledit capteur de pression statique 2 surveillé. Ce capteur de pression statique 2 est formé pour réaliser :
   ■ dès l'activation dudit système de chauffage 9, une première mesure d'au moins un paramètre précisé ci-dessous, qui dépend de la pression à l'intérieur de ladite sonde 4 ; et
   ■ une première durée prédéterminée après cette activation du système de chauffage 9, une seconde mesure dudit même paramètre ;
- au moins une unité centrale 11 qui est reliée par une liaison 12 audit module 5, pour calculer la différence entre lesdites première et seconde mesures et comparer cette différence à une valeur prédéterminée précisée ci-dessous ; et
- des moyens d'alerte 13 qui sont reliés par une liaison 14 à ladite unité centrale 11, pour émettre un signal d'alerte (visuel et/ou sonore) signalant la détection d'une obstruction, si l'unité centrale 11 leur indique que la différence précitée est supérieure à ladite valeur prédéterminée.

Lesdits moyens d'alerte 13 émettent un signal d'alerte, uniquement si ladite différence est supérieure à ladite valeur prédéterminée pendant au moins une seconde durée prédéterminée, également précisée ci-dessous.

Le dispositif 1 prend donc en compte le fait que si la prise de pression 4A de la sonde 4 est bouchée ou obstruée, par exemple par un morceau de ruban adhésif, l'air qui est emprisonné à l'intérieur de cette sonde 4 (et de la tuyauterie 6) va s'échauffer dès que le système de chauffage 9 de la sonde 4 est activé de sorte que la pression statique à l'intérieur de la sonde 4 (et de la tuyauterie 6) qui est mesurée par le capteur de pression statique 2 va alors augmenter très rapidement et de façon significative. Cette augmentation peut être détectée par le dispositif 1, soit en surveillant directement la pression statique mesurée, soit en surveillant un autre paramètre (notamment l'altitude barométrique) qui dépend de cette pression statique et varie anormalement quand cette dernière varie anormalement.

Comme de façon usuelle le système de chauffage 9 de la sonde 4 est activé au sol, généralement dès la mise en marche d'au moins un moteur (non représenté) de l'aéronef ou lorsque l'aéronef commence à rouler ou lorsque l'équipage enclenche le bouton poussoir du réchauffage des sondes ("Probe/Windows Heat Push Button" en anglais), le dispositif 1 est en mesure de détecter l'obstruction de la prise de pression 4A de cette sonde 4, lorsque l'aéronef se trouve encore au sol. Aussi, en cas de détection d'une telle obstruction au sol, le personnel de maintenance peut rapidement déboucher la sonde 4 obstruée, et ceci avant le décollage de l'aéronef. Le capteur de pression statique 2 défaillant est donc rapidement réparé et remis en fonctionnement normal, et il peut être utilisé dès le vol qui est prévu.

Le dispositif 1 comporte, de plus, un moyen 16 pour réaliser une surveillance de l'état d'activation dudit système de chauffage 9 du capteur de pression statique 2 surveillé. Ce moyen 16 informe le dispositif 1 dès qu'il détecte l'activation dudit système de chauffage 9 de sorte que le dispositif 1 peut alors réaliser les mesures nécessaires précitées. Pour ce faire, ledit moyen 16 peut en particulier surveiller la mise en marche d'un premier moteur de l'aéronef et/ou l'activation d'un système de chauffage général et/ou le début du roulage de l'aéronef.

Bien entendu, le dispositif 1 peut surveiller simultanément plusieurs capteurs de pression statique 2.

On sait que, généralement, une centrale anémométrique 10 d'un aéronef est reliée à au moins deux capteurs de pression statique 2, dont les prises de pression 4A sont montées de part et d'autre de l'axe longitudinal 17 du fuselage 3 de l'aéronef, comme représenté sur la figure 1.

On notera de plus qu'un avion de transport civil comporte généralement trois centrales anémométriques 10 de ce type, dont :
- une première fournit des données qui sont affichées dans le poste de pilotage, à l'attention du pilote ;
- une deuxième fournit des données qui sont affichées dans le poste de pilotage, à l'attention du copilote ; et
- une troisième est utilisée en secours pour parer, le cas échéant, la défaillance desdites première et deuxième centrales anémométriques 10.

Le dispositif 1 peut surveiller tous les capteurs de pression statique 2 d'une centrale anémométrique 10 ou tous les capteurs de pression statique 2 de l'ensemble des centrales anémométriques 10 de l'aéronef. Pour ce faire, il comporte à chaque fois les capteurs de pression statique 2 qu'il surveille.

On notera que la liaison 12 permettant de relier un module 5 à l'unité centrale 11 est une liaison électrique, réalisée de préférence sous forme d'un bus de communication au standard "ARINC 429". Il est également envisageable d'intégrer différents modules 5 directement dans l'unité centrale 11.

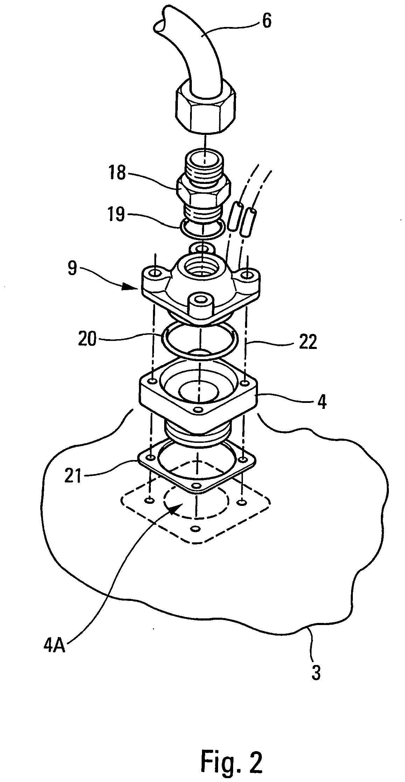

Sur la figure 2, on a représenté un exemple de montage d'une sonde 4 sur le fuselage 3 d'un aéronef. Pour ce faire, ce montage comporte, de façon usuelle, entre ladite tuyauterie 6 et le fuselage 3, successivement les éléments suivants :
- un raccord 18 à vis ;
- une rondelle 19 ;
- le système de chauffage 9 qui est de préférence de type électrique ;
- une rondelle 20 ;
- la sonde 4 de pression statique ; et
- une rondelle 21,
les éléments 9, 4 et 21 pouvant être fixés par des boulons communs sur le fuselage 3, comme illustré par des lignes 22 en traits mixtes.

En outre, ladite unité centrale 11 peut faire partie notamment :
- d'un calculateur central d'alarme, de type "FWC" ("Flight Warning Computer" en anglais) ; ou
- d'une unité de référence inertielle et de données anémométriques, de type "ADIRU" ("Air Data Inertial Reference Unit" en anglais).

Par ailleurs, lesdits moyens d'alerte 13 comportent un écran 15, en particulier un écran d'affichage de messages d'alerte de type "ECAM" ("Electronic Centralized Aircraft Monitoring" en anglais).

Le paramètre mesuré par le dispositif 1 représente l'altitude barométrique de l'aéronef. Le dispositif 1 a alors pour objet de détecter toute variation d'altitude barométrique importante et soudaine, lors de l'activation du (ou des) système(s) de chauffage 9 du (ou des) capteur(s) de pression statique 2 surveillé(s). Dans ce cas, de préférence, le dispositif 1 surveille et comporte deux capteurs de pression statique 2, et chacune des première et seconde mesures de l'altitude barométrique est réalisée à l'aide de données air fournies par chacun de ces deux capteurs de pression statique 2. L'altitude barométrique est alors calculée à chaque fois, de façon usuelle, à partir de la pression statique moyenne des mesures de pression statique réalisées par ces deux capteurs de pression statique 2 qui sont situés, de préférence, à droite et à gauche de l'aéronef.

De plus, on peut utiliser, à titre d'exemple, les valeurs prédéterminées suivantes :
- comme première durée prédéterminée : 60 secondes ;
- comme valeur prédéterminée d'altitude barométrique, à laquelle on compare la différence d'altitude barométrique entre les première et seconde mesures réalisées : 20 pieds (environ 6 mètres) ; et
- comme seconde durée prédéterminée : 5 secondes.

En outre, le paramètre mesuré par le dispositif 1 représente le taux de variation de l'altitude barométrique.

Par ailleurs, le dispositif 1 utilise, comme paramètre surveillé, la pression statique qui est mesurée directement par le (ou les) capteur(s) de pression statique 2 surveillé(s), c'est-à-dire la pression statique qui existe à l'intérieur de la sonde 4 et de la tuyauterie 6 de chaque capteur de pression statique 2 surveillée.

On peut utiliser à titre d'exemple les valeurs prédéterminées suivantes :
- comme première durée prédéterminée : 75 secondes ;
- comme valeur prédéterminée de pression statique, à laquelle on compare la différence entre les première et seconde mesures de pression statique : 1 mbar ; et
- comme seconde durée prédéterminée : 10 secondes.

Le dispositif 1 permet donc de réaliser une surveillance efficace et robuste d'au moins un capteur de pression statique 2 d'un aéronef.

## Revendications

1. Procédé pour détecter l'obstruction d'une prise de pression (4A) d'une sonde (4) d'au moins un capteur de pression (2) d'un aéronef, ledit capteur de pression (2) étant susceptible de mesurer la pression à l'intérieur de la sonde (4) et comportant, en plus de ladite sonde (4), au moins un système de chauffage activable (9) susceptible de chauffer cette dernière, procédé selon lequel :
a) lors de l'activation du système de chauffage (9) d'au moins un capteur de pression (2), on réalise à l'aide dudit capteur de pression (2) une première mesure d'au moins un paramètre dépendant de la pression à l'intérieur de ladite sonde (4) ;
b) une première durée prédéterminée après ladite activation du système de chauffage (9), on réalise à l'aide dudit capteur de pression (2) une seconde mesure dudit paramètre ;
c) on calcule la différence entre lesdites première et seconde mesures ;
d) on compare la différence ainsi calculée à une valeur prédéterminée ; et
e) si cette différence est supérieure à ladite valeur prédéterminée, on émet un signal d'alerte signalant la détection d'une obstruction.

2. Procédé selon la revendication 1,
**caractérisé en ce que** l'on met en oeuvre une surveillance de l'état d'activation dudit système de chauffage (9) du capteur de pression (2) et **en ce qu'**à l'étape a), on réalise ladite première mesure dès que l'on détecte l'activation dudit système de chauffage (9) grâce à ladite surveillance.

3. Procédé selon l'une des revendications 1 et 2,
**caractérisé en ce qu'**à l'étape e), on émet un signal d'alerte uniquement si ladite différence est supérieure à ladite valeur prédéterminée pendant au moins une seconde durée prédéterminée.

4. Procédé selon l'une des revendications 1 à 3,
**caractérisé en ce que** ledit paramètre représente l'altitude barométrique.

5. Procédé selon la revendication 4,
**caractérisé en ce que** l'on utilise deux capteurs de pression (2) et **en ce que** chacune desdites première et seconde mesures de l'altitude barométrique est réalisée à l'aide de données air fournies par ces deux capteurs de pression (2).

6. Procédé selon l'une des revendications 1 à 3,
**caractérisé en ce que** ledit paramètre représente le taux de variation de l'altitude barométrique.

7. Procédé selon l'une des revendications 1 à 3,
**caractérisé en ce que** ledit paramètre correspond à la pression statique présente à l'intérieur de la sonde (4).

## Claims

1. A method for detecting the obstruction of a pressure tap (4A) of a probe (4) of at least one pressure sensor (2) of an aircraft, said pressure sensor (2) being provided to measure the pressure inside the probe (4) and comprising, in addition to said probe (4), at least one activatable heating system (9) provided to heat the latter, method according to which:
a) on activation of the heating system (9) of at least one pressure sensor (2), a first measurement is taken using said pressure sensor (2) of at least one parameter dependent on the pressure inside said probe (4);
b) a first predetermined duration after said activation of the heating system (9), a second measurement of said parameter is taken using said pressure sensor (2);
c) the difference between said first and second measurements is calculated;
d) the duly calculated difference is compared with a predetermined value; and
e) if this difference is greater than said predetermined value, an alert signal is emitted, indicating the detection of an obstruction.

2. The method as claimed in claim 1,
**characterized in that** monitoring of the state of activation of said heating system (9) of the pressure sensor (2) is implemented, and **in that**, in the step a), said first measurement is taken immediately the activation of said heating system (9) is detected thanks to said monitoring.

3. The method as claimed in one of claims 1 and 2,
**characterized in that**, in the step e), a warning signal is emitted only if said difference is greater than said predetermined value for at least one second predetermined duration.

4. The method as claimed in one of claims 1 to 3,
**characterized in that** said parameter represents the barometric altitude.

5. The method as claimed in claim 4,
**characterized in that** two pressure sensors (2) are used, and **in that** each of said first and second measurements of the barometric altitude is taken using air data supplied by these two pressure sensors (2).

6. The method as claimed in one of claims 1 to 3,
**characterized in that** said parameter represents the barometric altitude rate.

7. The method as claimed in one of claims 1 to 3,
**characterized in that** said parameter corresponds to the static pressure present inside the probe (4).

## Patentansprüche

1. Verfahren zum Erfassen der Verstopfung eines Staurohres (4A) einer Sonde (4) von zumindest einem Drucksensor (2) eines Luftfahrzeuges, wobei der besagte Drucksensor (2) imstande ist, den Druck im Inneren der Sonde (4) zu messen, und umfassend, zusätzlich zur besagten Sonde (4), zumindest ein aktivierbares Heizsystem (9), das imstande ist, letztere aufzuheizen, Verfahren, bei dem:
a) man bei der Aktivierung des Heizsystems (9) zumindest eines Drucksensors (2) mithilfe des besagten Drucksensors (2) eine erste Messung zumindest eines Parameters durchführt, der vom Druck im Inneren der besagten Sonde (4) abhängt;
b) man einen ersten vorbestimmten Zeitraum nach der besagten Aktivierung des Heizsystems (9) mithilfe des besagten Drucksensors (2) eine zweite Messung des besagten Parameters durchführt;
c) man den Unterschied zwischen der besagten ersten und der besagten zweiten Messung errechnet;
d) man den so errechneten Unterschied mit einem vorbestimmten Wert vergleicht; und
e) man, wenn dieser Unterschied größer als der vorbestimmte Wert ist, ein Warnsignal ausgibt, das die Erfassung einer Verstopfung anzeigt.

2. Verfahren nach Anspruch 1,
**dadurch gekennzeichnet, dass** man eine Überwachung des Aktivierungszustandes des besagten Heizsystems (9) des Drucksensors (2) anwendet, und dadurch, dass man im Schritt a) die besagte erste Messung durchführt, sobald man die Aktivierung des besagten Heizsystems (9) dank der besagten Überwachung erfasst.

3. Verfahren nach einem der Ansprüche 1 und 2,
**dadurch gekennzeichnet, dass** man im Schritt e) nur dann ein Warnsignal ausgibt, wenn der besagte Unterschied zumindest einen zweiten vorbestimmten Zeitraum lang größer ist, als der vorbestimmte Wert.

4. Verfahren nach einem der Ansprüche 1 bis 3,
**dadurch gekennzeichnet, dass** der besagte Parameter die Druckhöhe darstellt.

5. Verfahren nach Anspruch 4,
**dadurch gekennzeichnet, dass** man zwei Drucksensoren (2) verwendet, und dadurch, dass jede der beiden ersten und zweiten Messungen der Druckhöhe anhand von Luftdaten durchgeführt wird, die von diesen beiden Drucksensoren (2) geliefert werden.

6. Verfahren nach einem der Ansprüche 1 bis 3,
**dadurch gekennzeichnet, dass** der besagte Parameter die Veränderungsrate der Druckhöhe darstellt.

7. Verfahren nach einem der Ansprüche 1 bis 3,
**dadurch gekennzeichnet, dass** der besagte Parameter dem statischen Druck im Inneren der Sonde (4) entspricht.
